# EUROPÄISCHE PATENTSCHRIFT

(11) **EP 2 509 790 B1**
(45) Veröffentlichungstag und Bekanntmachung des Hinweises auf die Patenterteilung: **06.10.2021**
(21) Anmeldenummer: 10784326.0
(22) Anmeldetag: 06.12.2010
(51) Int. Cl.: B32B 27/40

(54) **VERWENDUNG VON SCHICHTAUFBAUTEN IN WINDKRAFTANLAGEN**
USE OF LAYER SUPERSTRUCTURES IN WIND POWER PLANTS
UTILISATION DE SUPERSTRUCTURES EN COUCHES DANS DES ÉOLIENNES

(30) Priorität: 12.12.2009 DE 102009058101
(43) Veröffentlichungstag der Anmeldung: 17.10.2012
(73) Patentinhaber: Covestro Intellectual Property GmbH & Co. KG, 51373 Leverkusen (DE)
(72) Erfinder: PASSMANN, Dirk, 46145 Oberhausen (DE); FRANKEN, Klaus, 51467 Bergisch Gladbach (DE); LINDNER, Stefan, 50670 Köln (DE)
(74) Vertreter: Levpat
(86) Internationale Anmeldenummer: PCT/EP2010/068992
(87) Internationale Veröffentlichungsnummer: WO 2011/069975

(56) Entgegenhaltungen:
- EP-A2- 2 148 087
- WO-A1-2010/108701
- DE-A1- 10 150 247

## Beschreibung

Die Erfindung betrifft die Verwendung von Schichtaufbauten bei der Herstellung von Rotorblättern für Windkraftanlagen sowie Rotorblätter für Windkraftanlagen.

Energie aus Windkraft gewinnt immer mehr an Bedeutung, so dass Windkraftanlagen, insbesondere die Rotorblätter und deren Herstellung intensiv untersucht und weiterentwickelt werden. Ein Hauptaugenmerk liegt dabei in der Qualität der hergestellten Rotorblätter und einer kostengünstigen Herstellung. Die bisher bekannten Rotorblätter für Windkraftanlagen bestehen aus faserverstärkten Kunststoffen auf der Basis von Harzen als Matrixmaterial, wie beispielsweise Polyesterharze (UP), Vinylesterharze (VE), Epoxidharze (EP). Die Herstellung der Blätter erfolgt hauptsächlich so, dass jeweils eine untere und eine obere Hälfte des Flügels in einem Stück hergestellt werden. Diese beiden Hälften werden anschließend aufeinander gelegt und verklebt. Zur Verstärkung werden Streben oder Gurte mit eingeklebt.

Bei der Herstellung der Flügelhälften werden zuerst Faserverbundwerkstoffe hergestellt, die aushärten müssen. Dieser Aushärteprozess ist sehr zeitaufwendig und nachteilig für eine schnelle Gesamtfertigung. Die Rotorblätter für Windkraftanlagen aus den vorgenannten Harzen werden üblicherweise durch Handlaminieren, Handlaminieren mit Unterstützung durch Prepregtechnologie, durch Wickelverfahren oder das vakuumunterstützte Infusionsverfahren hergestellt. Beim Handlaminieren wird zunächst eine Form präpariert, indem ein Trennmittel und gegebenenfalls ein Gelcoat auf die Formoberfläche aufgetragen werden. Anschließend werden nacheinander Glasgelege mit unidirektionaler oder biaxialer Orientierung in die Form gelegt. Danach wird das Harz auf das Gelege aufgetragen und manuell durch Rollen in das Gelege eingedrückt. Dieser Schritt kann entsprechend oft wiederholt werden. Zusätzlich können Gurte als Verstärkungsmaterial und sonstige Teile, wie z.B. Blitzschutzeinrichtungen eingearbeitet werden. Auf diese erste glasfaserverstärkte Schicht wird eine sogenannte Distanzschicht, in der Regel aus Balsaholz, Polyvinylchlorid (PVC)oder Polyurethan (PUR)-Schaum, und eine zweite glasfaserverstärkte Schicht analog der ersten aufgetragen. Dieses Verfahren hat zwar den Vorteil, dass die Maschineninvestitionen gering und die Fehlererkennung und Korrekturmöglichkeit einfach sind, jedoch ist die Fertigung zu lohnintensiv, wodurch die Kosten des Verfahrens sehr hoch sind und die langen Fertigungszeiten führen zu mehr Fehlern und zu einem hohen Aufwand zur Qualitätssicherung.

Das Handlaminierverfahren mit Unterstützung durch Prepregtechnologie erfolgt ähnlich wie das einfache Handlaminierverfahren. Hierbei werden jedoch die sogenannten Prepregs (mit Harz getränkte vorgefertigte Glasmatten) außerhalb der Form hergestellt und dann in der Rotorblattform positioniert. Die gegenüber dem einfachen Handlaminieren durchgeführte Teilautomatisierung zur Fertigung der Prepregs führt zwar zu einer verbesserten Qualitätskonstanz bei der Rotorfertigung, jedoch erfordert der Schutz der Arbeiter vor den in den flüssigen Harzmischungen enthaltenen leichtflüchtigen Verbindungen einen nicht unerheblichen Aufwand (Arbeitsplatzsicherheit etc.).

In EP 2 148 087 A wird die Verwendung eines Polyurethanschaums in Verbindung mit einem "Line support" für Kabel innerhalb der Turbine, aber nicht im Rotorblatt, offenbart. Der Einsatz von Polyurethan - Pulvern für die Herstellung von Prepreg-Composites für Rotorblätter wird in nicht vorveröffentlichter WO 2010/108701 A beschrieben. Die DE 10150247 offenbart die Außenhaut eines fluidumströmten Körpers, enthaltend eine Polyurethanschicht als dünne (ggfs. profilgebende) Außenschicht, welche auf eine - ebenfalls dünne Gewebeschicht laminiert ist. Polyurethan und Gewebeschicht sind hier nicht zu einem faserverstärkten Kunststoff vereinigt.

Beim Harzinjektionsverfahren (auch als "Resin Transfer Molding" (RTM) oder "Vakuumunterstütztes Resin Transfer Molding" (VA RTM) oder "SCRIMP Process" (**S**eemann **C**omposites **R**esin **I**nfusion **M**olding **P**rocess) werden die Formen präpariert, indem ein Trennmittel und eventuell ein Gelcoat aufgetragen werden. Anschließend werden die trockenen Fasermatten nach einem genauen Fertigungsplan in die Form gelegt. Die erste eingelegte Schicht wird später die nach außen gelegene Schicht des Rotorblattes ergeben. Anschließend werden die Distanzmaterialien eingelegt, worauf wieder Fasermatten platziert werden, die dann die innere Schicht der fertigen Rotorhälfte/- Rotorhalbschale bilden. Mit einer vakuumfesten Folie wird dann die gesamte Form hermetisch geschlossen. Aus der so präparierten Form wird die Luft aus Fasermatten und Distanzmaterialien entzogen, bevor an verschiedenen Stellen das Harz in die Form (Raum zwischen Folie und Form) injiziert wird. Dieses Verfahren hat - wie auch die beiden vorher genannten - den Nachteil, dass die notwendige Aushärtezeit bis zur Entformung des Bauteils mit bis zu 12 Stunden sehr lang ist und die Produktivität der Anlagen dadurch sehr stark eingeschränkt ist.

Aufgabe der vorliegenden Erfindung war es daher, Rotorblätter zur Verfügung zu stellen, die die vorgenannten Nachteile nicht aufweisen und zudem kostengünstig in kürzerer Zeit hergestellt werden können.

Diese Aufgabe konnte überraschenderweise dadurch gelöst werden, dass die Rotorblätter mit Polyurethan als Kunststoff anstelle der oben genannten Harze hergestellt werden. Insbesondere in der äußeren Hülle des Rotorblattes wird erfindungsgemäß Polyurethan als Kunststoff verwendet; die eingesetzten Faserschichten in der äußeren Hülle werden damit beaufschlagt.

Gegenstand der Erfindung ist ein Verfahren zur Herstellung von Rotorblättern für Windkraftanlagen, die eine äußere Hülle aufweisen, die zumindest teilweise aus einem Schichtaufbau mit folgenden Schichten besteht
a) eine Trennmittelschicht
b) gegebenenfalls eine Gelcoatschicht
c) eine mit Kunststoff behandelte Faserschicht
d) gegebenenfalls eine Distanzhalterschicht
e) eine mit Kunststoff versehene Faserschicht
f) gegebenenfalls eine Kunststofffolie
wobei die Reaktionsmischung aus Isocyanatkomponente und Verbindungen mit mindestens zwei gegenüber Isocyanaten reaktiven Wasserstoffatomen in den vorbereiteten evakuierten Schichtaufbau injiziert wird, und

Ein weiterer Gegenstand der Erfindung sind Rotorblätter für Windkraftanlagen, die nach dem erfindungsgemäßen Verfahren hergestellt werden.

Ein weiterer Gegenstand der Erfindung ist die Verwendung eines Schichtaufbaus bei der Herstellung von Rotorblättern für Windkraftanlagen nach dem erfindungsgemäßen Verfahren, wobei der Schichtaufbau folgende Schichten aufweist
a) eine Trennmittelschicht
b) gegebenenfalls eine Gelcoatschicht
c) eine mit Kunststoff behandelte Faserschicht
d) gegebenenfalls eine Distanzhalterschicht
e) eine mit Kunststoff versehene Faserschicht
f) gegebenenfalls eine Kunststofffolie
und dadurch gekennzeichnet ist, dass als Kunststoff Polyurethan eingesetzt wird, welches als Reaktionsmischung aus Isocyanatkomponente und Verbindungen mit mindestens zwei gegenüber Isocyanaten reaktiven Wasserstoffatomen in den vorbereiteten evakuierten Schichtaufbau injiziert wird.

Für die Trennmittelschicht werden bevorzugt silikon- oder wachshaltige Trennmittel eingesetzt. Diese sind aus der Literatur bekannt.

Die Gelcoatschicht besteht vorzugsweise aus Polyurethan-, Epoxid-, ungesättigten Polyester- oder Vinylharzen.

Als Faserschicht können vorzugsweise Glasfaserwirrlagen, Glasfasergewebe und -gelege, geschnittene oder gemahlene Glas- oder Mineral-Fasern sowie Fasermatten, -vliese und -gewirke auf der Basis von Polymer-, Mineral-, Kohlenstoff-, Glas- bzw. Aramidfasern sowie deren Mischungen, besonders bevorzugt Glasfasermatten oder Glasfaservliese eingesetzt werden. Als Distanzhalterschicht können bevorzugt Kunststoffschäume, Holz oder Metall verwendet werden.

Die optional eingesetzte Kunststofffolie kann bei der Herstellung des Rotorblattes als Schicht in der Umhüllung verbleiben oder bei der Entformung der Hälfte des Rotorblattes entfernt werden. Sie dient insbesondere dazu, die Formhalbschale, die mit den zuvor genannten Schichten bestückt ist, im Herstellungsprozess zur Evakuierung vor dem Füllen mit dem flüssigen Harzgemisch abzudichten.

Als Kunststoff wird Polyurethan eingesetzt. Polyurethane sind erhältlich durch die Umsetzung von Polyisocyanaten mit Verbindungen mit mindestens zwei gegenüber Isocyanaten reaktiven Wasserstoffatomen. Die Reaktionsmischung aus Isocyanatkomponente und Verbindungen mit mindestens zwei gegenüber Isocyanaten reaktiven Wasserstoffatomen wird in den vorbereiteten evakuierten Schichtaufbau injiziert.

Als Verbindungen mit mindestens zwei gegenüber Isocyanat reaktiven Wasserstoffatomen kommen im allgemeinen solche in Frage, die zwei oder mehrere reaktive Gruppen, wie zum Beispiel OH-Gruppen, SH-Gruppen, NH-Gruppen, NH₂-Gruppen und CH-acide Gruppen, im Molekül tragen. Vorzugsweise werden Polyetherpolyole und/oder Polyesterpolyole, besonders bevorzugt Polyetherpolyole eingesetzt. Die Polyolformulierung enthält vorzugsweise als Polyole solche, die eine OH-Zahl von 200 bis 1830 mg KOH/g, bevorzugt von 300 bis 1000 mg KOH/g und besonders bevorzugt von 350 bis 500 mg KOH/g aufweisen. Die Viskosität der Polyole ist vorzugsweise ≤ 800 mPas (bei 25°C). Vorzugsweise haben die Polyole mindestens 60 % sekundäre OH-Gruppen, bevorzugt mindestens 80 % sekundäre OH-Gruppen und besonders bevorzugt 90 % sekundäre OH-Gruppen. Polyetherpolyole auf Basis Propylenoxid sind besonders bevorzugt.

Als Polyisocyanatkomponente kommen die üblichen aliphatischen, cycloaliphatischen und insbesondere aromatischen Di- und/oder Polyisocyanate zum Einsatz. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, Bis(4,4'-isocyanatocyclohexyl)methan oder dessen Mischungen mit den übrigen Isomeren, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (pMDI) davon, 1,3- und/oder 1,4-Bis-(2-isocyanato-prop-2-yl)-benzol (TMXDI), 1,3-Bis-(isocyanatomethyl)benzol (XDI). Als Isocyanat wird vorzugsweise Diphenylmethandiisocyanat (MDI) und insbesondere Gemische aus Diphenylmethandiisocyanat und Polyphenylenpolymethylenpolyisocyanat (pMDI) verwendet. Die Gemische aus Diphenylmethandiisocyanat und Polyphenylenpolymethylenpolyisocyanat (pMDI) haben einen bevorzugten Monomergehalt zwischen 40 und 100 Gew.-%, bevorzugt zwischen 50 und 90 Gew.%, besonders bevorzugt zwischen 60 und 80 Gew.-%. Der NCO-Gehalt des verwendeten Polyisocyanates sollte vorzugsweise über 25 Gew.-%, bevorzugt über 30 Gew.-%, besonders bevorzugt über 31,4 Gew.% liegen. Vorzugsweise sollte das eingesetzte MDI einen Gehalt an 2,2'-Diphenylmethandiisocyanat und an 2,4'- Diphenylmethandiisocyanat von zusammen mindestens 3 Gew.-%, bevorzugt mindestens 20 Gew.-%, besonders bevorzugt von mindestens 40 Gew.-% aufweisen. Die Viskosität des Isocyanates sollte vorzugsweise ≤ 250 mPas (bei 25°C), bevorzugt von ≤ 100 mPas (bei 25°C) und besonders bevorzugt von ≤ 50 mPas (bei 25°C) sein.

Die Polyurethanreaktionsmischung kann bevorzugt neben den bekannten reaktiven Komponenten und Additiven und Zusatzmitteln vorzugsweise Füllstoffe, wie Kohlenstoffnanoröhrchen, Bariumsulfat, Titandioxid, Kurzglasfasern oder natürliche faser- oder plättchenförmige Minerale, wie z.B. Wollastonite oder Muskowite enthalten. Als Additive und Zusatzmittel werden vorzugsweise Entschäumer, Katalysatoren und latente Katalysatoren eingesetzt. Weitere bekannte Additive und Zusatzmittel können bei Bedarf verwendet werden.

Geeignete Polyurethansysteme sind insbesondere solche, die transparent sind. Da bei der Herstellung größerer Formteile eine niedrige Viskosität für eine gleichmäßige Füllung der Form notwendig ist, sind daher Polyurethansysteme besonders geeignet, die eine Viskosität von ≤ 5000 mPas (bei 25°C; 30 min. nach Vermischen der Komponenten), bevorzugt ≤ 2000 mPas, besonders bevorzugt 1000 mPas aufweisen. Vorzugsweise wird das Umsetzungsverhältnis zwischen Isocyanatkomponente und Verbindungen mit mindestens zwei gegenüber Isocyanaten reaktiven Wasserstoffatomen so gewählt, dass im Reaktionsgemisch das Verhältnis von Anzahl an Isocyanatgruppen zu Anzahl an gegenüber Isocyanat reaktiven Gruppen zwischen 0,9 und 1,5, bevorzugt zwischen 1,0 und 1,2, besonders bevorzugt zwischen 1,02 und 1,1 liegt.

In einer bevorzugten Ausführungsform wird die Reaktionsmischung aus Isocyanatkomponente und Verbindungen mit mindestens zwei gegenüber Isocyanaten reaktiven Wasserstoffatomen bei einer Temperatur zwischen 20 und 80 °C, besonders bevorzugt zwischen 25 und 40 °C, injiziert.

Nach dem Einfüllen der Reaktionsmischung kann das Aushärten des Polyurethans durch Heizen der Form beschleunigt werden. In einer bevorzugten Ausführungsform wird die injizierte Reaktionsmischung aus Isocyanatkomponente und Verbindungen mit mindestens zwei gegenüber Isocyanaten reaktiven Wasserstoffatomen bei einer Temperatur zwischen 40 und 160 °C, bevorzugt zwischen 60 und 120 °C, besonders bevorzugt zwischen 70 und 90 °C, ausgehärtet.

Die Erfindung soll anhand der nachfolgenden Beispiele näher erläutert werden.

### Beispiele

Es wurden Formkörper (Platten) aus verschiedenen Polyurethansystemen hergestellt und mit einem Standard Epoxid-Harzsystem verglichen. Die Plattengröße war 17cm ^{*} 17cm mit einer Dicke von 4mm.

Die Entformzeit ist diejenige Zeit, nach der der PUR-Probenkörper ohne Deformierung manuell aus der Plattenform genommen werden kann.

Die Viskosität wurde 30 Minuten nach dem Vermischen der Komponenten bestimmt, da bei der Herstellung größerer Formteile eine bestimmte Zeit lang eine niedrige Viskosität für eine gleichmäßige Füllung der Form notwendig ist.

### Beispiel 1

70 g Baygal® K 55 (Polyetherpolyol der Firma Bayer MaterialScience AG; OH-Zahl: 385 ± 15 mg KOH/g; Viskosität bei 25 °C: 600 ± 50 mPas) wurden mit 65,3 g Baymidur® K 88 (Produkt der Firma Bayer MaterialScience AG; Gemisch von Diphenylmethandiisocyanat und Polyphenylenpolymethylenpolyisocyanat; NCO-Gehalt 31,5 ± 0,5 Gew.-%; Viskosität bei 25 °C: 90 ± 20 mPas) bei Raumtemperatur verrührt und mit Unterdruck entgast. Die Lösung wurde in eine Plattenform gegossen und eine Stunde bei Raumtemperatur gelagert. Danach wurde die Probe bei 80 °C getempert. Die Gelierzeit betrug ca. 70 Minuten und die Entformzeit betrug zwei Stunden.

Der Prüfkörper hatte eine Härte von 76 Shore D.

Die Viskosität bei 25 °C betrug 30 Minuten nach dem Vermischen der Komponenten 1540 mPas.

### Beispiel 2

70 g Baygal® K 55 (Polyetherpolyol der Firma Bayer MaterialScience AG; OH-Zahl: 385 ± 15 mg KOH/g; Viskosität bei 25 °C: 600 ± 50 mPas) wurden mit 63 g Baymidur® VP.KU 3-5009 (Firma Bayer MaterialScience AG; Gemisch von Diphenylmethandiisocyanat und Polyphenylenpolymethylenpolyisocyanat; NCO-Gehalt 31,5 - 33,5 Gew.-%; Viskosität bei 25 °C: 15 - 30 mPas) bei Raumtemperatur verrührt und mit Unterdruck entgast. Die Lösung wurde in eine Plattenform gegossen und eine Stunde bei Raumtemperatur gelagert. Danach wurde die Probe bei 80 °C getempert. Die Entformzeit betrug zwei Stunden.

Der Prüfkörper hatte eine Härte von 76 Shore D.

Die Viskosität bei 25 °C betrug 30 Minuten nach dem Vermischen der Komponenten 974 mPas.

### Vergleichsbeispiel 3

180 g Infusionsharz Larit RIM 135 (L-135i) (Produkt der Firma Lange+Ritter) wurden mit 60 g Härter Larit RIMH 137 (Produkt der Firma Lange+Ritter) bei Raumtemperatur verrührt und mit Unterdruck entgast. Die Lösung wurde in eine Plattenform gegossen und eine Stunde bei Raumtemperatur gelagert. Danach wurde die Probe bei 80 °C getempert. Die Entformzeit betrug zwölf Stunden.

Der Prüfkörper hatte eine Härte von 76 Shore D.

Das Polyurethansystem konnte signifikant schneller entformt werden. Die schnellere Entformzeit des Polyurethansystems ermöglicht eine höhere Produktivität, da die Belegungszeit der Formen deutlich reduziert werden kann und somit mehr Formkörper hergestellt werden können.

## Patentansprüche

1. Verwendung eines Schichtaufbaus bei der Herstellung von Rotorblättern für Windkraftanlagen, wobei der Schichtaufbau folgende Schichten aufweist
a) eine Trennmittelschicht
b) gegebenenfalls eine Gelcoatschicht
c) eine mit Kunststoff behandelte Faserschicht
d) gegebenenfalls eine Distanzhalterschicht
e) eine mit Kunststoff versehene Faserschicht
f) gegebenenfalls eine Kunststofffolie
**dadurch gekennzeichnet, dass** als Kunststoff Polyurethan eingesetzt wird, welches als Reaktionsmischung aus Isocyanatkomponente und Verbindungen mit mindestens zwei gegenüber Isocyanaten reaktiven Wasserstoffatomen in den vorbereiteten evakuierten Schichtaufbau injiziert wird.

2. Verfahren zur Herstellung von Rotorblättern für Windkraftanlagen, die eine Umhüllung aufweisen, die zumindest teilweise aus einem Schichtaufbau mit folgenden Schichten besteht
a) eine Trennmittelschicht
b) gegebenenfalls eine Gelcoatschicht
c) eine mit Kunststoff behandelte Faserschicht
d) gegebenenfalls eine Distanzhalterschicht
e) eine mit Kunststoff versehene Faserschicht
f) gegebenenfalls eine Kunststofffolie,
**dadurch gekennzeichnet, dass** die Faserschichten mit einem Reaktionsgemisch zur Herstellung von Polyurethan als Kunststoff behandelt werden, wobei die Reaktionsmischung aus Isocyanatkomponente und Verbindungen mit mindestens zwei gegenüber Isocyanaten reaktiven Wasserstoffatomen in den vorbereiteten evakuierten Schichtaufbau injiziert wird.

3. Verfahren gemäß Anspruch 2, **dadurch gekennzeichnet, dass** das Reaktionsgemisch als Isocyanat Diphenylmethandiisocyanat und/oder Polyphenylenpolymethylenpolyisocyanat mit einem NCO-Gehalt von mehr als 25 Gew.-% enthält.

4. Verfahren gemäß Anspruch 2, **dadurch gekennzeichnet, dass** das Reaktionsgemisch als Verbindung mit mindestens zwei gegenüber Isocyanat reaktiven Wasserstoffatomen ein Polyetherpolyol enthält, bei dem mindestens 60 % der OH-Gruppen sekundäre OH-Gruppen sind und das eine OH-Zahl von 200 bis 1830 mg KOH/g hat.

5. Verfahren gemäß Anspruch 2, **dadurch gekennzeichnet, dass** das Reaktionsgemisch bei einer Temperatur zwischen 20 und 80°C in die Faserschichten appliziert wird.

6. Verfahren gemäß Anspruch 2, **dadurch gekennzeichnet, dass** das Reaktionsgemisch bei einer Temperatur zwischen 40 und 160 °C ausgehärtet wird.

7. Verfahren gemäß Anspruch 2, **dadurch gekennzeichnet, dass** das Reaktionsgemisch 30 Minuten nach dem Vermischen ein Viskosität ≤ 5000 mPas hat.

8. Rotorblätter für Windkraftanlagen, hergestellt nach einem Verfahren gemäß Anspruch 2.

## Claims

1. Use of a layer structure in the production of rotor blades for wind power plants, wherein the layer structure has the following layers:
a) a release agent layer,
b) optionally a gel coat layer,
c) a fibre layer treated with plastics material,
d) optionally a spacer layer,
e) a fibre layer provided with plastics material,
f) optionally a plastics film,
**characterized in that** the plastics material used is polyurethane, which is injected into the prepared evacuated layer structure as a reaction mixture of isocyanate component and compounds having at least two isocyanate-reactive hydrogen atoms.

2. Process for producing rotor blades for wind power plants, having a shell consisting at least partly of a layer structure having the following layers:
a) a release agent layer,
b) optionally a gel coat layer,
c) a fibre layer treated with plastics material,
d) optionally a spacer layer,
e) a fibre layer provided with plastics material,
f) optionally a plastics film,
**characterized in that** the fibre layers are treated with a reaction mixture for production of polyurethane as plastics material, wherein the reaction mixture composed of isocyanate component and compounds having at least two isocyanate-reactive hydrogen atoms is injected into the prepared evacuated layer structure.

3. Process according to Claim 2, **characterized in that** the isocyanate present in the reaction mixture is diphenylmethane diisocyanate and/or polyphenylene polymethylene polyisocyanate having an NCO content of more than 25 wt%.

4. Process according to Claim 2, **characterized in that** the compound having at least two isocyanate-reactive hydrogen atoms present in the reaction mixture is a polyether polyol in which at least 60% of the OH groups are secondary OH groups and which has an OH number of 200 to 1830 mg KOH/g.

5. Process according to Claim 2, **characterized in that** the reaction mixture is applied to the fibre layers at a temperature between 20 and 80°C.

6. Process according to Claim 2, **characterized in that** the reaction mixture is cured at a temperature between 40 and 160°C.

7. Process according to Claim 2, **characterized in that** the reaction mixture has a viscosity ≤ 5000 mPas 30 minutes after mixing.

8. Rotor blades for wind turbines, produced by a process according to Claim 2.

## Revendications

1. Utilisation d'une structure en couches lors de la fabrication de pales de rotor pour des éoliennes, la structure en couches comprenant les couches suivantes :
a) une couche d'agent antiadhérent,
b) éventuellement une couche d'enduit gélifié,
c) une couche de fibres traitée avec une matière plastique,
d) éventuellement une couche d'espaceur,
e) une couche de fibres munie d'une matière plastique,
f) éventuellement un film en matière plastique,
**caractérisée en ce que** du polyuréthane est utilisé en tant que matière plastique, qui est injecté en tant que mélange réactionnel d'un composant isocyanate et de composés contenant au moins deux atomes d'hydrogène réactifs aves les isocyanates dans la structure en couches évacuée préparée.

2. Procédé de fabrication de pales de rotor pour des éoliennes, qui comprennent une enveloppe, qui est au moins partiellement constituée d'une structure en couches comprenant les couches suivantes :
a) une couche d'agent antiadhérent,
b) éventuellement une couche d'enduit gélifié,
c) une couche de fibres traitée avec une matière plastique,
d) éventuellement une couche d'espaceur,
e) une couche de fibres munie d'une matière plastique,
f) éventuellement un film en matière plastique,
**caractérisé en ce que** les couches de fibres sont traitées avec un mélange réactionnel pour la fabrication de polyuréthane en tant que matière plastique, le mélange réactionnel d'un composant isocyanate et de composés contenant au moins deux atomes d'hydrogène réactifs aves les isocyanates étant injecté dans la structure en couches évacuée préparée.

3. Procédé selon la revendication 2, **caractérisé en ce que** le mélange réactionnel contient en tant qu'isocyanate du diisocyanate de diphénylméthane et/ou du polyisocyanate de polyphénylène-polyméthylène ayant une teneur en NCO de plus de 25 % en poids.

4. Procédé selon la revendication 2, **caractérisé en ce que** le mélange réactionnel contient en tant que composé contenant au moins deux atomes d'hydrogène réactifs avec les isocyanates un polyéther-polyol, dans lequel au moins 60 % des groupes OH sont des groupes OH secondaires et qui a un indice OH de 200 à 1 830 mg de KOH/g.

5. Procédé selon la revendication 2, **caractérisé en ce que** le mélange réactionnel est appliqué dans les couches de fibres à une température comprise entre 20 et 80 °C.

6. Procédé selon la revendication 2, **caractérisé en ce que** le mélange réactionnel est durci à une température comprise entre 40 et 160 °C.

7. Procédé selon la revendication 2, **caractérisé en ce que** le mélange réactionnel a une viscosité ≤ 5 000 mPas 30 minutes après le mélange.

8. Pales de rotor pour des éoliennes, fabriquées par un procédé selon la revendication 2.
